# EUROPÄISCHE PATENTANMELDUNG

(11) **EP 2 103 927 A2**
(43) Veröffentlichungstag der Anmeldung: **23.09.2009**
(21) Anmeldenummer: 09002972.9
(22) Anmeldetag: 03.03.2009
(51) Int. Cl.: G01N 21/898, G01N 21/89

(54) **Verfahren zur automatisierten Überwachung textiler Verstärkungsmaterialien für die Herstellung faserverstärkter Kunststoffe**

(30) Priorität: 17.03.2008 DE 102008014656
(71) Anmelder: EADS Deutschland GmbH, 85521 Ottobrun (DE)
(72) Erfinder: Weiser, Armin, 86916 Kaufering (DE)

(57) **Zusammenfassung**

Die Erfindung betrifft ein Verfahren zur automatisierten Überwachung einer Materialbahn aus textilen Verstärkungsmaterialien aus Kohlenstoff-, Glas- oder Aramidfasern oder Mischungen (FM) für die Herstellung faserverstärkter Kunststoffe durch Erzeugung einer über die gesamte Breite des Verstärkungsmaterials reichende optischen Abbildung des zu überwachenden Verstärkungsmaterials (FM) und anschließende Analyse der Abbildung in einem Computer zur Erkennung von Materialeigenschaften der Verstärkungsmaterialien. Erfindungsgemäß wird die optische Abbildung fortlaufend und parallel zur Verarbeitung der Verstärkungsmaterialien durch Vorbeiführen des Verstärkungsmaterials (FM) an einem stationären Zeilenscanner (ZS) erzeugt.
Der Zeilenscanner umfasst eine Lichtquelle (LQ) und einen Licht-Sensor (CM).

## Beschreibung

Die Erfindung betrifft ein Verfahren zur automatisierten Überwachung textiler Verstärkungsmaterialien für die Herstellung faserverstärkter Kunststoffe nach dem Oberbegriff des Anspruch 1.

Bei der Herstellung von faserverstärkten Kunststoffen werden die textilen Verstärkungsmaterialien, z.B. aus Kohlefasern, momentan vor allem durch visuelle Kontrollen an der Maschine oder in einem separaten Arbeitsgang von Personen durchgeführt.

Eine automatisierte Überwachung auf der Basis einer digitalen Aufnahme einer Kamera ist auf Grund der Farbe und Reflektionseigenschaften des Materials nur stark eingeschränkt möglich. Um Details richtig auflösen zu können, ist durch die dunkle Oberfläche der Materialien eine starke Beleuchtung notwendig, was aber Reflektionen des Materials hervorruft und auch eine gleichmäßige Helligkeit des Bildes verhindert. Grundsätzliche Untersuchungen hierzu finden sich in der Veröffentlichung M. Schneider et al:"Quality Analysis of Reinforcement Structures for Composites by Digital Image Processing", 25th International SAMPE Europe Conference, March 30th - April 1st 2004, Paris. In dieser Veröffentlichung wird auch der Einsatz eines Flachbettscanners vorgeschlagen, der eine Aufnahme des sich auf dem ebenen Scannerbett befindlichen Materials erzeugt. Bei der Erzeugung von Einzelbildern, sei es durch eine Kamera oder durch einen Scanner, ergeben die hohen, zur computergestützten Auswertung erforderlichen Auflösungen hohe Datenmengen, die nicht mehr mit ausreichender Geschwindigkeit übertragen und verarbeitet werden können.

Aus der DE 37 41 195 A1 ist ein Verfahren zur Fehlererkennung innerhalb einer Stoffbahn offenbart. Die Stoffbahn wird zeilenweise durch Vorbeibewegen an einer optischen Abtasteinrichtung abgetastet. Von jeder Zeile wird ein Zeilensignal erzeugt. Das Summensignal mehrerer Zeilensignale wird einer Schwellwert- oder Zähloperation unterworfen. Ähnlich arbeitet auch das in der DE 196 43 406 A1 offenbarte Verfahren, bei dem ebenfalls eine zeilenförmige optische Abtasteinrichtung eingesetzt wird. Das Summensignal der einzelnen Abtastelemente der Zeile wird einer elektronischen Auswerteeinheit zur weiteren Auswertung zugeführt.

Die US 2007/0078557 A1 beschreibt ebenfalls ein Verfahren, bei dem eine Stoffbahn an zeilenförmig angeordneten optischen Sensoren vorbeibewegt wird. Aus den Signalen der einzelnen Sensoren wird ein Maß für die Gleichförmigkeit der Stoffbahn über der Breite gewonnen.

In der EP 1 265 051 B1 wird eine Textilbahn zwischen einer Lichtquelle und einer Zeile von optischen Sensoren vorbeibewegt. Aus dem Schattenwurf der Textilbahn auf der Sensorzeile kann die Dicke des Garns ermittelt werden.

Die EP 1 302 766 A2 beschreibt ein Verfahren, bei dem eine Stoffbahn an einem zeilenförmig ausgebildeten CMOS-Sensor vorbeibewegt wird. Die Stoffbahn weist eine Markierung auf, die durch Bildauswertung der von dem CMOS-Sensor erzeugten Abbildung der Stoffbahn erkannt wird. Die lineare Ausdehnung des CMOS-Sensors ist auf einen Teilbereich der Breite der Stoffbahn beschränkt, innerhalb dessen die Markierung zu erwarten ist.

Der Erfindung liegt die Aufgabe zugrunde, ein gattungsgemäßes Verfahren zu schaffen, mit der eine für die Auswertung ohne Einschränkungen verwendbare Abbildung der zu überwachenden Materialien in Echtzeit erzeugt werden kann.

Diese Aufgabe wird mit dem Verfahren nach Anspruch 1 gelegt. Vorteilhafte Ausführungen der Erfindung sowie eine Vorrichtung zur Durchführung des Verfahrens sind Gegenstände weiterer Ansprüche.

Erfindungsgemäß wird die optische Abbildung des Verstärkungsmaterials fortlaufend durch Vorbeiführen des Verstärkungsmaterials an einem stationären Zeilenscanner erzeugt und kann so als Grundlage für die weitere computergesteuerte Auswertung der optischen Abbildung dienen. Das Bild des zu überwachenden Verstärkungsmaterials wird Zeile für Zeile aufgebaut. Die zu übertragende Datenmenge beschränkt sich jeweils auf die aktuell erzeugte Bildzeile. Damit wird eine fortlaufende online-Materialüberwachung parallel (d.h. in Echtzeit) zum laufenden Verarbeitungsprozess des Verstärkungsmaterials ermöglicht. Die gesamte Materialbahn kann somit fortlaufend und ohne Unterbrechung geprüft werden.

Das textile Verstärkungsmaterial ist aus Kohlenstoff-, Glas- oder Aramidfasern oder Mischungen gebildet, welche in Form von Geweben, Gelegen, Bändern, Vliesen oder Matten vorliegen kann.

Die Scannerleiste kann fest in einer Maschine, in welcher derartiges Verstärkungsmaterial prozessiert wird, integriert sein. Dabei kann es sich z.B. um eine Maschine zur Herstellung von Gelegen oder Geweben, um eine Maschine zur Weiterverarbeitung des Verstärkungsmaterials (z.B. beim Kaschieren) oder um eine Maschine zur Herstellung von faserverstärkten Bauteilen (z.B. Intervallheißpresse) handeln.

Die Scannerleiste kann ein an sich bekanntes sogenanntes CIS-Modul (Contact Image Sensor) sein, wie es in Faxgeräten und Scannern verwendet wird. Es umfasst bevorzugt eine CMOS-Sensorreihe als Lichtsensor, eine LED-Beleuchtung und eine Linearoptik in einem kompakten Gehäuse. Die folgenden Auflösungen sind möglich: 200 dpi, 300 dpi 600 dpi und 1200 dpi. Das Auslesen der Bilddaten in den Rechner kann über USB 2.0, Firewire oder CameraLink erfolgen. Für die Optik werden in der Regel Stablinsen-Arrays eingesetzt. Es sind aber auch andere Optiken einsetzbar. Im Gegensatz zu Kameras mit CCD-Sensoren bieten CMOS-Sensoren in der Regel einen höheren Dynamikumfang und liefern damit auch unter schwierigen Beleuchtungsbedingungen noch brauchbare Bilder.

Die in der Scannerleiste integrierte Lichtquelle (z.B. LEDs) beleuchtet den Werkstoff homogen über die gesamte Breite. Vorteilhaft kann die Art der Lichtquelle an die Art des Verstärkungsmaterials angepasst werden.

Durch den direkt über dem Verstärkungsmaterial befindlichen Zeilenscanner wirken sich Lichteinflüsse von außen, durch Hallenbeleuchtung, Sonneneinstrahlung etc. nicht auf die Aufnahme aus, da in den Aufnahmebereich nur das homogene Licht der Scannerleiste auf das Material scheint und störende Lichtquellen abgeschottet sind. Dies ermöglicht der Software bei der Auswertung der Abbildung selbst Aufschmelzgrade von Klebematerialien (z.B. Klebevliese) zu kontrollieren, was nur bei einer konstanten Grauwertverteilung möglich ist. Der bevorzugte Abstandsbereich zwischen Scanner und Verstärkungsmaterial liegt bevorzugt im Bereich kleiner als 1 cm.

Die durch einen Zeilenscanner möglichen Auflösungen, derzeit ca. 1200dpi , können auf der gesamten Materialbreite erreicht werden, was mit einer Kamera nicht möglich ist. Diese Auflösung würde bei einer Materialbreite von 1400mm ca. 66.000 Bildpunkte ergeben, was bei einem 4:3 CCD Kamerachip eine Auflösung von 3.267.000.000 Pixel bedeuten würde. Selbst 600dpi ergeben eine Auflösung von 816.750.000 Pixel, was heute auch noch nicht umsetzbar ist.

Diese hohen Auflösungen können durch die zeilenweise Abtastung mittels Zeilenscanner im laufenden Prozess aufgenommen, übertragen und weiterverarbeitet werden. Die Auflösung ist ausreichend, um insbesondere Materialfehler oder Materialorientierungen zu erkennen. Auf den Abbildungen können z.B. Nähfehler und Fadenbrüche, Ausrichtung der Nähfäden, Ausrichtung der Verstärkungsfasern, Breite der Vernähung, Spalten zwischen Rovings, etc. erkannt werden.

Die Vorteile der Erfindung - insbesondere gegenüber der Verwendung von Kameras sind:
- eine homogene Beleuchtung durch die in der Scannerleiste befindliche und auf das Material abstimmbare Lichtquelle;
- keine Lichteinflüsse von außen, somit Grauauswertung z.B. bei Kaschierungen möglich;
- konstante Schärfe durch den gleichmäßigen Abstand des Materials zur Lichtsensorzeile des Zeilenscanners;
- hohe Auflösung über gesamte Breite einer Materialbahn;
- die zu übertragende Datenmenge beschränkt sich jeweils auf die aktuell erzeugte Bildzeile;
- Erstellung eines Gesamtbildes, ohne das Teilbilder kombiniert werden müssen;
- geringe Abmessungen des Zeilenscanners, die auch leicht an den an der betreffenden Maschine vorhandenen Bauraum angepasst werden können. Dadurch kann die Kontrollfunktion auch an beengten oder schwer zugänglichen Orten der betreffenden Maschine durchgeführt werden.

Die Erfindung kann insbesondere für die folgenden Einsätze vorgesehen werden:
- automatisierte Kontrolle und Markierung von Fehlern bei der Materialherstellung: z.B. automatisierte Kontrolle beider Seiten von zweilagigen Gelegen, bei dreilagigen Gelegen können zusätzlich die inneren Lagen vor Aufbringung der äußeren Lagen kontrolliert werden.
- automatisierte Kontrolle und Markierung von Fehlern in der Materialweiterverarbeitung (Kaschieren von Gelegen, Schneiden von Tapes):

- z.B. Einsatz bei der Auswertung des Aufschmelzgrads eines Bindervlieses durch Grauwertauswertung.
- Lagen- und Positionierungskontrolle mit anschließender Markierung bei der automatisierten Bauteilfertigung:

- Kontrolle, ob die Lagen beim Zusammenführen der Einzellagen richtig positioniert werden. Ein vollautomatisierter Herstellungsprozess für faserverstärkte Bauteile wird dadurch erst möglich.

Die Erfindung wird anhand mehrerer konkreter Ausführungsbeispiele unter Bezugnahme auf Fig. näher erläutert. Es zeigen jeweils in schematischer Darstellung:
- Fig. 1: den Ablauf des erfindungsgemäßen Verfahrens mit einer ersten Ausführung des Zeilenscanners (in Querschnittsdarstellung);
- Fig. 2: drei Ausführungen des eingesetzten Zeilenscanners im Vergleich.

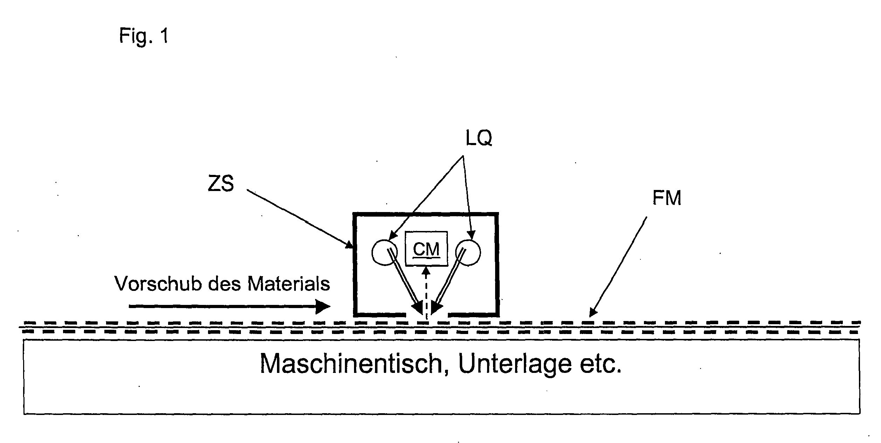

Fig. 1 zeigt ein erstes Beispiel für die Durchführung des erfindungsgemäßen Verfahrens. Das zu überwachende textile Verstärkungsmaterial FM wird auf einem Maschinentisch oder einer sonstigen Unterlage transportiert. Dabei kann es z.B. von einer Vorratsrolle abgewickelt werden. Die Vorschubrichtung ist mit einem Pfeil symbolisiert. Das Verstärkungsmaterial FM bewegt sich an einem fest installierten Zeilenscanner ZS vorbei, wo zeilenweise und fortlaufend ein scharfes und kontrastreiches optisches Bild über die gesamte Materialbreite erzeugt wird. Der Abstand zwischen Material FM und Zeilenscanner ZS beträgt typischerweise nur einige Millimeter. Der Zeilenscanner ZS umfasst in dieser Ausführung einen zentralen CMOS-Sensor CM sowie zwei seitlich integrierte Lichtquellen LQ.

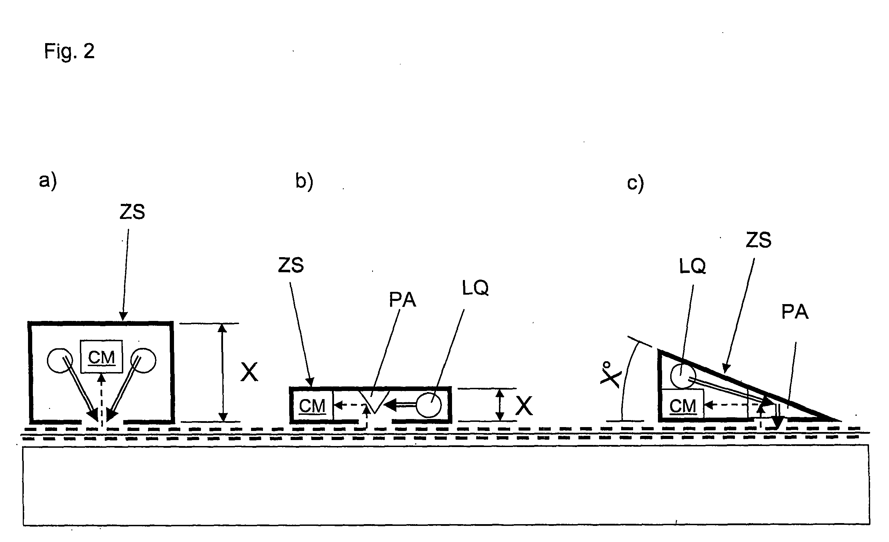

Ein wesentlicher Vorteil der Erfindung ist die Tatsache, dass der Zeilenscanner ZS naturgemäß im Querschnitt sehr wenig Bauraum beansprucht. Dadurch ist z.B. bei einer Intervallheißpresse der Einbau der Scannerleiste in der Nähe der Materialzusammenführung möglich. Durch eine Änderung der Bauform kann darüber hinaus sehr leicht eine Anpassung an die räumlichen Vorgaben der betreffenden Maschine erzielt werden. In der Fig. 2 sind dazu drei verschiedene Ausführungen des Zeilenscanners ZS in unterschiedlichen Bauformen dargestellt.

Die in der Fig. 2, linke Abbildung a) gezeigt Ausführung entspricht vollkommen der in Fig. 1 gezeigten Ausführung.

Die mittlere Abbildung b) zeigt eine sehr flache Ausführung des Zeilenscanners ZS geringer Bauhöhe X. Sie umfasst nur eine seitliche Lichtquelle LQ. Licht-Sensor CM und Lichtquelle LQ sind auf einer Linie parallel zum Material angeordnet. Das von der Lichtquelle LQ ausgehende wie auch das reflektierte Licht wird mittels eines zentralen Prismas PA umgelenkt.

Die rechte Ausführung gemäß Fig. 2c) weist zur Anpassung an gegebene Bauraumbeschränkungen einen dreieckigen Querschnitt mit vorgegebenem Öffnungswinkel X auf. Lichtquelle LQ und Licht-Sensor CM sind im höheren Ende des Dreiecks auf einer Linie senkrecht zum Material FM angeordnet. Sowohl das von der Lichtquelle LQ ausgehende Licht wie auch das vom Verstärkungsmaterial FM reflektierte Licht für den CMOS-Sensor CM werden über das Prisma PA am spitz zulaufenden Ende des Querschnitts geleitet.

## Patentansprüche

1. Verfahren zur automatisierten Überwachung einer Materialbahn aus textilen Verstärkungsmaterialien aus Kohlenstoff-, Glas- oder Aramidfasern oder Mischungen (FM) für die Herstellung faserverstärkter Kunststoffe durch Erzeugung einer über die gesamte Breite des Verstärkungsmaterials reichende optischen Abbildung des zu überwachenden Verstärkungsmaterials (FM) und anschließende Analyse der Abbildung in einem Computer zur Erkennung von Materialeigenschaften der Verstärkungsmaterialien, **dadurch gekennzeichnet, dass** die optische Abbildung fortlaufend und parallel zur Verarbeitung der Verstärkungsmaterialien durch Vorbeiführen des Verstärkungsmaterials (FM) an einem stationären Zeilenscanner (ZS) erzeugt wird.

2. Verfahren nach Anspruch 1, **dadurch gekennzeichnet, dass** der Abstand zwischen Zeilenscanner (ZS) und Verstärkungsmaterial (FM) weniger als 1 cm beträgt.

3. Verfahren nach einem der vorangehenden Ansprüche, **dadurch gekennzeichnet, dass** das Verstärkungsmaterial (FM) in Form von Geweben, Gelegen, Bändern, Vliesen oder Matten vorliegt.
